# EUROPEAN PATENT APPLICATION

(11) **EP 4 404 536 A1**
(43) Date of publication of application: **24.07.2024**
(21) Application number: 22882661.6
(22) Date of filing: 09.10.2022
(51) Int. Cl.: H04L 67/10, H04W 4/70

(54) **METHOD, APPARATUS AND SYSTEM FOR TRANSMITTING BLOCKCHAIN INFORMATION**

(30) Priority: 22.10.2021 CN 202111234594
(71) Applicant: Huawei Technologies Co., Ltd., Shenzhen, Guangdong 518129 (CN)
(72) Inventor: TAN, Wei, Shenzhen, Guangdong 518129 (CN); ZHANG, Hang, Shenzhen, Guangdong 518129 (CN); LIU, Fei, Shenzhen, Guangdong 518129 (CN); YANG, Chenchen, Shenzhen, Guangdong 518129 (CN)
(74) Representative: Gill Jennings & Every LLP
(86) International application number: PCT/CN2022/124156
(87) International publication number: WO 2023/066051

(57) **Abstract**

This application discloses a blockchain information transmission method, an apparatus, and a system. The method may be performed by a first network element, or may be performed by a component of a first network element. For example, an execution body is the first network element. The method may be applied to a communication network. The communication network includes the first network element and one or more second network elements. The method may be implemented by performing the following steps: The first network element obtains first information. The first information includes information about a first blockchain, and the first blockchain is used to carry data of the first network element and data of the one or more second network elements. The first network element sends the first information to the one or more second network elements. Blockchain information is communicated in the communication network, so that a plurality of network elements that execute a same communication service in the communication network can use a blockchain technology, to meet a security requirement of the communication service, and improve security, privacy, reliability, and resilience of the communication service.

## Description

### CROSS-REFERENCE TO RELATED APPLICATIONS

This application claims priority to Chinese Patent Application No. 202111234594.9, filed with the China National Intellectual Property Administration on October 22, 2021 and entitled "BLOCKCHAIN INFORMATION TRANSMISSION METHOD, APPARATUS, AND SYSTEM", which is incorporated herein by reference in its entirety.

### TECHNICAL FIELD

Embodiments of this application relate to the field of communication technologies, and in particular, to a blockchain information transmission method, an apparatus, and a system.

### BACKGROUND

A blockchain is a database with a data "hash verification" function. A block may be considered as a data block. A blockchain technology is to combine data blocks into a chain structure in chronological order, and collectively maintain reliability of the database by using a cryptographic algorithm in a distributed ledger manner. All the data blocks are connected in chronological order to form a blockchain.

A unique consensus and smart contract mechanism of the blockchain brings a new opportunity for multi-party mutual trust in a decentralized network. The blockchain becomes a potential candidate technology in future communication networks. For example, a future 6th generation (6th generation, 6G) communication system has a hyperscale access and decentralized networking mode, and has necessary requirements: fast mutual trust, and effective recording and reviewing of a network behavior and operation data. The blockchain technology may meet the foregoing requirements.

Currently, application of the blockchain technology in the communication network is not very mature. How to improve possibility and maturity of applying the blockchain technology to the communication network is a problem that needs to be resolved.

### SUMMARY

Embodiments of this application provide a blockchain information transmission method, an apparatus, and a system, to improve a possibility and maturity of applying a blockchain technology to a communication network.

According to a first aspect, a blockchain information transmission method is provided. The method may be performed by a first network element, or may be performed by a component of the first network element. For example, an execution body is the first network element. The method may be applied to a communication network. The communication network includes the first network element and one or more second network elements. The method may be implemented by performing the following steps: The first network element obtains first information. The first information includes information about a first blockchain, and the first blockchain is used to carry data of the first network element and data of the one or more second network elements. The first network element sends the first information to the one or more second network elements. Blockchain information is communicated in the communication network, so that a plurality of network elements that execute a same communication service in the communication network can use a blockchain technology, to meet a security requirement of the communication service, and improve security, privacy, reliability, and resilience of the communication service. Introduction of the blockchain technology in the communication network can also support more forms of terminals. Changes of terminal forms and functions (for example, improvement of computing and communication capabilities of a vehicle) in the communication network can also help meet a basic operation requirement of a blockchain. By introducing the first network element into the communication network, a joint-type network capability and an interface can be supplemented, and an overall network architecture can be improved, so that a blockchain capability is converged into a basic capability of the communication network. In this way, a trustworthiness capability of the communication network is filled with a natural trustworthiness attribute of the blockchain.

According to the first aspect, this application provides the following possible designs.

In a possible design, the first network element receives second information from the second network element. The second information indicates, to the first network element, that the second network element updates a local blockchain parameter based on the first information.

In a possible design, the first network element receives third information from the second network element. The first network element updates the information about the first blockchain based on the third information. All network elements in a same group may be considered as nodes of a blockchain, and the nodes of the blockchain may jointly maintain update of the blockchain. When having an update requirement on the blockchain, for example, having a requirement on communication performance, the second network element may send the third information to the first network element. In this way, the first network element updates the information about the first blockchain based on the third information, so that a requirement and performance of the communication network can be better met, and the blockchain can be better applied to the communication network. In addition, end-to-end bidirectional configuration and feedback can be implemented. Players in a group can use more appropriate blockchain configurations based on network forms and scenarios. This helps improve network performance.

In a possible design, the second network element may be any one of the following: a terminal device, an access network device, a user plane function UPF network element, a session management function SMF network element, or an access and mobility management function AMF network element.

In a possible design, the second network element is the UPF, and the first network element may send the first information to the one or more second network elements in the following manner: The first network element sends the first information to the SMF through a first interface, and the SMF forwards the first information to the UPF. Alternatively, the first network element sends the first information to the UPF through a second interface.

In a possible design, the second network element is the access network device, and the first network element may send the first information to the one or more second network elements in the following manner: The first network element sends the first information to the AMF through a first interface, and the AMF forwards the first information to the access network device. Alternatively, the first network element sends the first information to the access network device through a third interface.

In a possible design, the second network element is the terminal device, and the first network element may send the first information to the one or more second network elements in the following manner: The first network element sends the first information to the AMF through a first interface, the AMF forwards the first information to the access network device, and the access network device forwards the first information to the terminal device. Alternatively, the first network element sends the first information to the access network device through a third interface, and the access network device forwards the first information to the terminal device.

In the foregoing several possible designs of interfaces, an interface is added to the communication network, so that the first network element can be deeply converged/integrated into a telecommunication network infrastructure, and information is shared in a trusted manner by using an open and transparent management plane, to provide a transparent customized service for a user. Therefore, the blockchain capability truly becomes a part of the basic capability of the telecommunication network, to lay a foundation for a communication industry to provide the capability for another industry and cooperate with the industry. In addition, this design has good compatibility with an existing protocol, and a blockchain service can be directly used without evolution and upgrade of a current protocol at each layer.

According to a second aspect, a blockchain information transmission method is provided. The method may be performed by a second network element, or may be performed by a component of the second network element. For example, an execution body is the second network element. The method may be applied to a communication network. The communication network includes a first network element and one or more second network elements. The method may be implemented by performing the following steps: The second network element receives first information from the first network element. The first information includes information about a first blockchain, and the first blockchain is used to carry data of the first network element and data of the one or more second network elements. The second network element updates a local blockchain parameter based on the first information. For beneficial effects of the second aspect, refer to the descriptions of the first aspect.

According to the second aspect, this application provides the following possible designs.

In a possible design, the second network element sends second information to the first network element. The second information indicates, to the first network element, that the second network element updates the local blockchain parameter based on the first information.

In a possible design, the second network element sends third information to the first network element. The third information is used by the first network element to update the information about the first blockchain.

For beneficial effects of the two possible designs, refer to the related descriptions of the first aspect. Details are not described herein again.

According to the first aspect and the second aspect, this application may further provide the following possible designs.

In a possible design, the information about the first blockchain includes a wireless communication performance constraint parameter. The wireless communication performance constraint parameter can better indicate an indicator that can be implemented by the first blockchain, so that the second network element better uses the first blockchain, and feeds back different communication performance requirements to the first network element when having the communication performance requirements, to obtain better communication quality in time.

Based on a case that the information about the first blockchain includes the wireless communication performance constraint parameter, optionally, the wireless communication performance constraint parameter includes one or a combination of the following: a resource type, a packet delay budget, a packet error rate, energy consumption, or a calculation amount.

In a possible design, the information about the first blockchain further includes one or a combination of the following: an identifier of a first group, a blockchain type, a blockchain structure, a consensus algorithm, a contract, or a reward mechanism. The first group includes the first network element and the one or more second network elements.

Based on a case that the second network element sends the third information to the first network element, and/or the first network element receives the third information, optionally, the third information includes one or a combination of the following: the identifier of the first group, an identifier of the second network element, and a wireless communication performance requirement parameter. The first group includes the first network element and the one or more second network elements. The first network element may select a better blockchain parameter for a communication service based on the wireless communication performance requirement parameter.

According to a third aspect, a communication apparatus is provided. The apparatus may be a first network element, or may be a component (for example, a chip, a chip system, or a circuit) located in the first network element. The apparatus has a function of implementing the method according to any one of the first aspect and the possible designs of the first aspect. The function may be implemented by hardware, or may be implemented by executing corresponding software by hardware. The hardware or software includes one or more modules corresponding to the foregoing function. In a design, the apparatus may include a processing unit and a transceiver unit. For example, the processing unit is configured to obtain first information. The transceiver unit is configured to send the first information to one or more second network elements. For more detailed descriptions of the processing unit and the transceiver unit, refer to the related descriptions in the first aspect. For beneficial effects of the third aspect and the possible designs, refer to the descriptions of corresponding parts in the first aspect.

According to a fourth aspect, a communication apparatus is provided. The apparatus may be a second network element, or may be a component (for example, a chip, a chip system, or a circuit) located in the second network element. The apparatus has a function of implementing the method according to any one of the second aspect and the possible designs of the second aspect. The function may be implemented by hardware, or may be implemented by executing corresponding software by hardware. The hardware or software includes one or more modules corresponding to the foregoing function. In a design, the apparatus may include a processing unit and a transceiver unit. For example, the transceiver unit is configured to receive first information from a first network element. The processing unit is configured to update a local blockchain parameter based on the first information. For more detailed descriptions of the processing unit and the transceiver unit, refer to the related descriptions in the second aspect. For beneficial effects of the fourth aspect and the possible designs, refer to the descriptions of corresponding parts in the second aspect.

According to a fifth aspect, an embodiment of this application provides a communication apparatus. The communication apparatus includes an interface circuit and a processor, and the processor and the interface circuit are coupled to each other. The processor is configured to implement, by using a logic circuit or by executing code instructions, the method according to any one of the first aspect and the possible designs of the first aspect. The interface circuit is configured to receive a signal from a communication apparatus other than the communication apparatus and transmit the signal to the processor, or send a signal from the processor to the communication apparatus other than the communication apparatus. It may be understood that the interface circuit may be a transceiver or an input/output interface.

Optionally, the communication apparatus may further include a memory, configured to store instructions executed by the processor, store input data required by the processor to run the instructions, or store data generated after the processor runs the instructions. The memory may be a physically independent unit, or may be coupled to the processor, or the processor includes the memory.

According to a sixth aspect, an embodiment of this application provides a communication apparatus. The communication apparatus includes an interface circuit and a processor, and the processor and the interface circuit are coupled to each other. The processor is configured to implement, by using a logic circuit or by executing code instructions, the method according to any one of the second aspect and the possible designs of the second aspect. The interface circuit is configured to receive a signal from a communication apparatus other than the communication apparatus and transmit the signal to the processor, or send a signal from the processor to the communication apparatus other than the communication apparatus. It may be understood that the interface circuit may be a transceiver or an input/output interface.

Optionally, the communication apparatus may further include a memory, configured to store instructions executed by the processor, store input data required by the processor to run the instructions, or store data generated after the processor runs the instructions. The memory may be a physically independent unit, or may be coupled to the processor, or the processor includes the memory.

According to a seventh aspect, an embodiment of this application provides a computer-readable storage medium. The computer-readable storage medium stores a computer program or readable instructions. When the computer program or the readable instructions are executed by a communication apparatus, the method according to any one of the foregoing aspects and the possible designs of the aspects is performed.

According to an eighth aspect, an embodiment of this application provides a chip system. The chip system includes a processor, and may further include a memory. The memory is configured to store a program, instructions, or code. The processor is configured to execute the program, the instructions, or the code stored in the memory, to implement the method according to any one of the foregoing aspects and the possible designs of the aspects. The chip system may include a chip, or may include the chip and another discrete component.

According to a ninth aspect, a computer program product including instructions is provided. When the computer program product is executed by a communication apparatus, the method according to any one of the foregoing aspects and the possible designs of the aspects is performed.

According to a tenth aspect, a communication system is provided, including a first network element and one or more second network elements. The second network element includes any one of the following: a terminal device, an access network device, a user plane function UPF network element, a session management function SMF network element, or an access and mobility management function AMF network element. An interface connection relationship between the first network element and the second network element meets one or more of the following: the first network element is connected to the AMF and the SMF through a first interface; the first network element is connected to the UPF through a second interface; and the first network element is connected to the access network device through a third interface.

In a possible design, the first network element is configured to perform the method according to any one of the first aspect and the possible designs of the first aspect, and the second network element is configured to perform the method according to any one of the second aspect and the possible designs of the second aspect.

### BRIEF DESCRIPTION OF DRAWINGS

FIG. 1 is a schematic diagram of a system architecture according to an embodiment of this application;
FIG. 2 is a schematic diagram 1 of an architecture of a communication system according to an embodiment of this application;
FIG. 3 is a schematic diagram 2 of an architecture of a communication system according to an embodiment of this application;
FIG. 4a is a schematic flowchart 1 of a blockchain information transmission method according to an embodiment of this application;
FIG. 4b is a schematic flowchart 2 of a blockchain information transmission method according to an embodiment of this application;
FIG. 5 is a schematic flowchart 3 of a blockchain information transmission method according to an embodiment of this application;
FIG. 6 is a schematic flowchart 4 of a blockchain information transmission method according to an embodiment of this application;
FIG. 7 is a schematic flowchart 5 of a blockchain information transmission method according to an embodiment of this application;
FIG. 8 is a schematic flowchart 6 of a blockchain information transmission method according to an embodiment of this application;
FIG. 9 is a schematic diagram 1 of a structure of a communication apparatus according to an embodiment of this application; and
FIG. 10 is a schematic diagram 2 of a structure of a communication apparatus according to an embodiment of this application.

### DESCRIPTION OF EMBODIMENTS

Embodiments of this application provide a blockchain information transmission method and an apparatus, to improve a possibility and maturity of applying a blockchain technology to a communication network. The method and the apparatus are based on a same technical concept or similar technical concepts. Because problem-resolving principles of the method and the apparatus are similar, mutual reference may be made to implementation of the apparatus and the method, and repeated parts are not described.

In descriptions of embodiments of this application, the term "and/or" describes an association relationship between associated objects and indicates that three relationships may exist. For example, A and/or B may indicate the following three cases: Only A exists, both A and B exist, and only B exists. The character "/" usually indicates an "or" relationship between the associated objects. In this application, "at least one" means one or more, and "a plurality of" means two or more. In addition, it should be understood that, in the descriptions of this application, the terms such as "first", "second", and "third" are merely intended for distinguishing description, but cannot be understood as indication or implication of relative importance, or cannot be understood as indication or implication of order either.

The blockchain information transmission method provided in embodiments of this application may be applied to a 4th generation (4th generation, 4G) communication system, for example, long term evolution (long term evolution, LTE); may be applied to a 5th generation (5th generation, 5G) communication system, for example, 5G new radio (new radio, NR); or may be applied to various communication systems that evolve in the future, for example, a 6th generation (6th generation, 6G) communication system or a space-air-sea-ground integrated communication system. A 6G communication network includes space, air, ground, and sea in space, and includes a plurality of players (players) in role composition. An actual network carrier includes a satellite network, a middle- altitude and low-altitude platform such as an unmanned aerial vehicle, a cellular network, an internet of vehicles, an internet of things (internet of thing, IoT), a water surface network, and an underwater network. Embodiments of this application are described by using an example in which embodiments of this application are applied to the 6G communication network. It may be understood that embodiments of this application may further be applied to another communication system.

The 6G communication network is characterized by deep participation of a plurality of cross-industry players, but is not limited to a single operator. This determines that the 6G communication network needs a multi-party mutual trust mechanism and platform. In a hyperscale access and decentralized networking mode of 6G, necessary requirements are quickly implementing mutual trust and effectively recording and reviewing a network behavior/operation data. A blockchain technology essentially changes trust logic of human society and can better meet a related requirement of the 6G communication network. In the hyperscale access and decentralized networking mode of 6G, the necessary requirements are implementing the fast mutual trust and effectively recording and reviewing the network behavior and the operation data. Currently, the blockchain technology is most likely to meet the foregoing security requirement. Therefore, introducing the blockchain technology into the communication network can bring more security assurance means and a more flexible security mechanism to the communication network.

A blockchain is a data structure in which data is generated and stored in blocks (or blocks) and the blocks are connected into a chain (or chain) in chronological order. All nodes jointly participate in data verification, storage, and maintenance of a blockchain system. Consensus needs to be reached to create a block. The new block is broadcast to all nodes, to implement network-wide synchronization. Then, the new block cannot be modified or deleted. As a decentralized distributed ledger, unique consensus and a smart contract mechanism of the blockchain bring a new opportunity for a multi-party joint network trustworthiness capability in a decentralized network. The blockchain is a distributed ledger that integrates a plurality of technologies such as a cryptographical technology, a peer-to-peer (P2P) network, and a distributed database. A blockchain type includes a public chain, a consortium chain, or a private chain. A chain may be further classified into a main chain, a main chain and a side chain, or a plurality of parallel chains in structure. Blockchains of different types and structures may correspond to different consensus algorithms, incentive mechanisms, or contracts. Indicators such as a delay, a throughput, and energy consumption of each combination vary greatly. The 6G communication network includes a plurality of networking forms and application scenarios. Different forms and scenarios have different requirements on the blockchain.

Embodiments of this application provide a blockchain information transmission method, to meet requirements on a blockchain in different networking forms and scenarios through transmission of blockchain information when the blockchain technology is applied to the communication network

The following describes in detail embodiments of this application with reference to accompanying drawings.

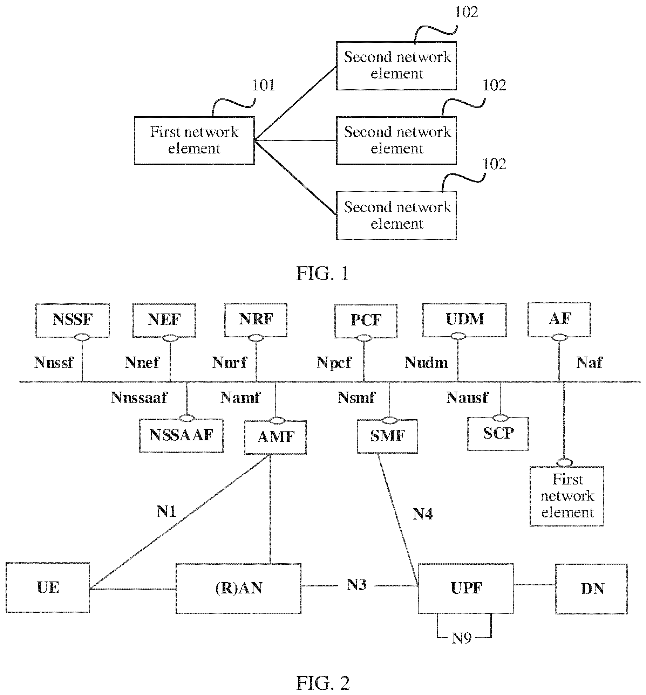

FIG. 1 shows a system architecture to which a blockchain information transmission method is applicable according to an embodiment of this application. The system architecture may include a first network element 101 and one or more second network elements 102. In FIG. 1, three second network elements are used as an example. It may be understood that the system may include more or fewer second network elements. The first network element 101 may also be referred to as a blockchain management network element, or a confederation of multi players for management and control of future wireless networks (confederation of multi players for management and control of future wireless networks, CONET) network element. The first network element 101 may also have another name.

The first network element 101 is configured to: enable a plurality of players (players) to form one group (group), and manage the players in the group. The first network element 101 may manage one or more groups. The player in the group may be a network element or a device that executes a communication service. For example, the player in the group may be any one of the following: a terminal device, an access network device, a user plane function (user plane function, UPF) network element, an access and mobility management function (access and mobility management function, AMF) network element, or a session management function (session management function, SMF) network element. Certainly, the player in the group may alternatively be another network element or another device in the communication network. The group may be carried by using a blockchain. The players in the group jointly participate in data verification, storage, and maintenance of a blockchain system, and the players in the group may also be considered as nodes in the blockchain. The first network element 101 may be further configured to manage a blockchain parameter of the group. The first network element 101 may be further configured to: monitor a status of a player in each group, and record an action (action) of each player in each group.

The second network element 102 may be a player in a group. A group may include one or more players, and a player in the group may be configured to execute a communication service. One second network element 102 may belong to one or more groups, and may be configured to execute different communication services in different groups. When a group is carried by using a blockchain, players in the group are equivalent to nodes in the blockchain, and transmission of blockchain information needs to be performed between the nodes.

Based on the system architecture shown in FIG. 1, the following provides two examples of a communication system architecture to which embodiments of this application are applicable. The communication system architecture may include an access network and a core network. The access network is configured to implement a function related to wireless access, and the access network includes a 3GPP access network and a non-3GPP (non-3GPP access network). The core network mainly includes the following key logical network elements: an access and mobility management function network element, a session management function network element, a user plane function network element, a policy control function network element, and a unified data management function network element. The communication system architecture may further include a first network element, and the first network element may be the first network element 101 shown in FIG. 1.

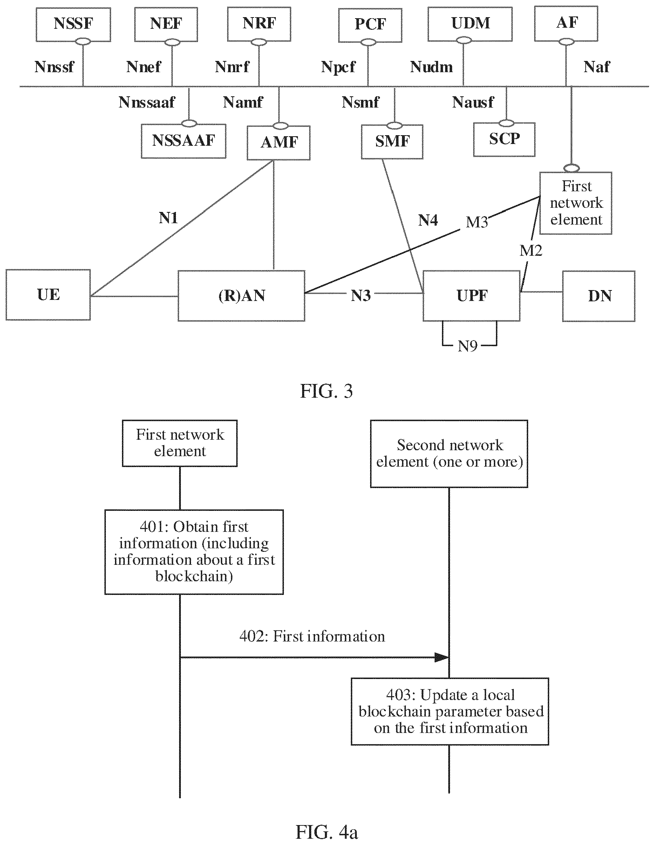

For example, FIG. 2 and FIG. 3 show two possible examples of an architecture of a communication system. Each network element or device in the architecture of the communication system is shown by using a specific example. The network elements or devices shown in FIG. 2 and FIG. 3 are merely examples, and an architecture of an actually summarized communication system may include more or fewer network elements. Specifically, the architecture of the communication system shown in FIG. 2 may include: a terminal device (for example, user equipment (user equipment, UE)), an AMF network element (which may be referred to as an AMF for short), an SMF network element (which may be referred to as an SMF for short), a UPF network element (which may be referred to as a UPF for short), a policy control function (policy control function, PCF) network element, a unified data management (unified data management, UDM) function network element, an authentication server function (authentication server function, AUSF) network element, a network exposure function (network exposure function, NEF) network element, an application function (application function, AF) network element, a network slice selection function (network slice selection function, NSSF) network element, a (radio) access network ((radio) access network, (R)AN) device, and a network repository function (network repository function, NRF) network element. The AMF network element may be connected to the access network device through an N2 interface, the access network device may be connected to the UPF through an N3 interface, the SMF may be connected to the UPF through an N4 interface, and the AMF network element may be connected to the UE through an N1 interface. The first network element may be connected to another network element through an M1 interface, where the M1 interface may be a service-oriented interface.

For network elements included in the architecture of the communication system and connection interfaces between the network elements shown in FIG. 3, refer to the descriptions in FIG. 2. The first network element may be connected to the UPF through an M2 interface, and the first network element may be connected to the access network device through an M3 interface. Optionally, the first network element may alternatively provide a service through the M1 interface.

It may be understood that the interface name is merely an example for description, and this is not specifically limited in this embodiment of this application. For example, the M1, M2, and M3 interfaces may all have other names.

It should be understood that embodiments of this application are not limited to the communication system shown in FIG. 2 or FIG. 3. Names of the network elements shown in FIG. 2 or FIG. 3 are merely used as examples for description herein, and are not intended to limit the network elements included in the communication system architecture to which this application is applicable. Functions of some network elements or devices in the communication system are described in detail below.

The terminal device may also be referred to as user equipment (user equipment, UE), a mobile station (mobile station, MS), a mobile terminal (mobile terminal, MT), or the like, and is a device that provides voice or data connectivity for a user. The terminal device may alternatively be an internet of things device. For example, the terminal device is a handheld device, a vehicle-mounted device, or the like that has a wireless connection function. The terminal device may be a mobile phone (mobile phone), a tablet computer, a notebook computer, a palmtop computer, a mobile internet device (mobile internet device, MID), a wearable device (for example, a smart watch, a smart band, or a pedometer), a vehicle-mounted device (for example, an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an unmanned aerial vehicle, or an aircraft), or the like. It should be understood that the terminal device in embodiments of this application may alternatively refer to a chip in the terminal device, or may refer to a communication apparatus, unit, or module that has a user equipment to user equipment (UE to UE, U2U) communication function, for example, an in-vehicle communication apparatus, an in-vehicle communication module, or an in-vehicle communication chip. In embodiments of this application, the terminal device may alternatively be a road side unit (road side unit) in an internet of vehicles communication system or a communication apparatus or a communication chip in the road side unit. The terminal device may further include a vehicle, a cellular network terminal (converging a satellite terminal function), and an IoT terminal.

The access network device is a node in a radio access network (radio access network, RAN), and may also be referred to as a base station or a RAN node (or device). Some examples of the network device 101 are: a next generation NodeB (next generation nodeB, gNB), a next generation evolved NodeB (next generation evolved nodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or a wireless fidelity (wireless fidelity, Wi-Fi) access point (access point, AP). The access network device may alternatively be a satellite, and the satellite may also be referred to as a high-altitude platform, a high-altitude aircraft, or a satellite base station. The access network device may alternatively be another device having an access network device function. For example, the access network device may alternatively be a device having an access network device function in device-to-device (device-to-device, D2D) communication or machine to machine (machine-to-machine, M2M) communication.

The access and mobility management function network element is mainly responsible for signaling processing, for example, functions such as access control, mobility management, attachment and detachment, and gateway selection. When providing a service for a session in the terminal device, the AMF network element provides control plane storage resources for the session, to store a session identifier, an SMF network element identifier associated with the session identifier, and the like. For example, in 5G, the access and mobility management function network element may be an AMF network element, for example, as shown in FIG. 2 or FIG. 3. In 6G, the access and mobility management function network element may still be an AMF network element or have another name. This is not limited in this application. When the access and mobility management function network element is the AMF network element, the AMF may provide an Namf service.

The session management function network element is mainly responsible for session management in a mobile network, for example, session establishment, modification, and release. Specific functions include, for example, allocation of an IP address for a user and selection of a UPF that provides a packet forwarding function. For example, in 5G, the session management function network element may be an SMF network element, for example, as shown in FIG. 1. In future communication, for example, in 6G, the session management function network element may still be an SMF network element or have another name. This is not limited in this application. When the session management function network element is the SMF network element, the SMF may provide an Nsmf service.

The user plane function network element is responsible for user data forwarding and receiving in the terminal device. The user plane function network element may receive user data from a data network, and transmit the user data to the terminal device via the access network device. The UPF network element may further receive the user data from the terminal device via the access network device, and forward the user data to the data network. A transmission resource and a scheduling functions that are used by the UPF network element to provide a service for the terminal device are managed and controlled by the SMF network element. For example, in 5G, the user plane function network element may be a UPF network element, for example, as shown in FIG. 2 or FIG. 3. In 6G, the user plane function network element may still be a UPF network element or have another name. This is not limited in this application.

The blockchain information transmission method provided in embodiments of this application may be performed by a first network element and a second network element, or may be performed by components (for example, processors, chips, or chip systems) of the first network element and the second network element. A primary body that performs the method in embodiments of this application may also be referred to as a communication apparatus. The communication apparatus may be the first network element or the second network element, or may be the component (for example, the processor, the chip, or the chip system) of the first network element or the second network element. The method is applied to a communication network or a communication system. The communication network or the communication system includes a first network element and one or more second network elements. The first network element and the one or more second network elements are carried in a first blockchain. Alternatively, the first network element and the one or more second network elements may be considered as nodes in a first blockchain. Alternatively, the first network element and the one or more second network elements may be considered as players in a group. The first network element and the one or more second network elements may be carried in the first blockchain. Alternatively, the first blockchain may be used to carry data of the first network element and data of the one or more second network elements. The first network element and the one or more second network elements jointly participate in data verification, storage, and maintenance of the first blockchain.

As shown in FIG. 4a, a specific procedure of a blockchain information transmission method provided in an embodiment of this application is described as follows.

S401: A first network element obtains first information.

The first information includes information about a first blockchain.

S402: The first network element sends the first information to one or more second network elements. Correspondingly, the one or more second network elements receive the first information from the first network element.

S403: The second network element updates a local blockchain parameter based on the first information.

In the embodiment of FIG. 4a, blockchain information is communicated in a communication network, so that a plurality of network elements that execute a same communication service in the communication network can use a blockchain technology, to meet a security requirement of the communication service, and improve security, privacy, reliability, and resilience of the communication service.

The following describes some optional implementations of the embodiment of FIG. 4a.

The first network element may be the first network element shown in FIG. 1, FIG. 2, or FIG. 3. The second network element may be any one of the following: a terminal device, an access network device, a UPF network element, an SMF network element, or an AMF network element. The terminal device, the access network device, the UPF network element, the SMF network element, or the AMF network element may be the network element in the system shown in FIG. 2 or FIG. 3. The first network element may also be referred to as a first device or a first apparatus, and the second network element may also be referred to as a second device or a second apparatus. The second network element may alternatively be another network element, for example, any network element shown in FIG. 2 or FIG. 3.

The first network element and different second network elements may form different groups. Each group is applicable to one networking form and scenario, and may be used to execute a communication service. For example, a group may include: the first network element, the terminal device, and the access network device. Another group may include: the first network element, the UPF network element, and the SMF network element. Another group may include the first network element, the AMF network element, the access network device, and the terminal device. Other possible combination forms are not exemplified one by one. The first network element may manage one or more groups.

The first network element may send the first information to one or more second network elements in a group. With reference to the system architecture in FIG. 2 or FIG. 3, a manner in which the first network element sends the first information when the second network elements are different network elements is described below by using an example.

When the second network element is the SMF network element, based on the architecture in FIG. 2 or FIG. 3, the first network element may send the first information to the SMF through a service-oriented interface: an M1 interface. The SMF receives the first information from the first network element through the M1 interface.

When the second network element is the AMF network element, based on the architecture in FIG. 2 or FIG. 3, the first network element may send the first information to the AMF through a service-oriented interface: an M1 interface. The AMF receives the first information from the first network element through the M1 interface.

When the second network element is the UPF network element, based on the architecture in FIG. 2, the first network element may send the first information to the SMF through a service-oriented interface: an M1 interface, and the SMF forwards the first information to the UPF through an N4 interface. The UPF receives the first information from the SMF through the N4 interface. It should be noted that in this embodiment of this application, when information forwarding is involved, original information may be forwarded, or original information may be processed and forwarded. The descriptions are applicable to the entire application.

When the second network element is the UPF network element, based on the architecture in FIG. 3, the first network element may send the first information to the UPF through a service-oriented interface: an M2 interface. The UPF may receive the first information from the first network element through the M2 interface.

When the second network element is the access network device, based on the architecture in FIG. 2, the first network element may send the first information to the AMF through a service-oriented interface: an M1 interface, and the AMF may forward the first information to the access network device through an N2 interface. The access network device receives the first information from the AMF through the N2 interface.

When the second network element is the access network device network element, based on the architecture in FIG. 3, the first network element may send the first information to the access network device through a service-oriented interface: an M3 interface. The access network device receives the first information from the first network element through the M3 interface.

When the second network element is the terminal device, based on the architecture in FIG. 2, the first network element may send the first information to the AMF through a service-oriented interface: an M1 interface, the AMF forwards the first information to the access network device, and the access network device forwards the first information to the terminal device. The terminal device receives the first information from the access network device.

When the second network element is the terminal device, based on the architecture in FIG. 3, the first network element may send the first information to the access network device through an M3 interface, and the access network device forwards the first information to the terminal device. The terminal device receives the first information from the access network device.

The first information may be communicated between the access network device and the terminal device through a wireless network interface (for example, a Uu interface).

As described in the architecture descriptions of FIG. 2 or FIG. 3, the M1 interface, the M2 interface, and the M3 interface may have other names.

When the first network element sends the first information to the second network element, the first information may carry an identifier of the second network element, to indicate that the first information needs to be sent to the second network element corresponding to the identifier. For example, when the second network element is the UPF, the first information carries an identifier of the UPF. When receiving the first information, the SMF forwards the first information to the UPF based on the identifier of the UPF carried in the first information. Certainly, the first information may carry identifiers of a plurality of second network elements, that is, the first network element may send the first information to the plurality of second network elements. For example, the first information sent by the first network element to the SMF carries an identifier of the SMF and an identifier of the UPF. After receiving the first information, the SMF updates a local blockchain parameter based on the first information, and forwards the first information to the UPF. After receiving the first information from the SMF, the UPF updates a local blockchain parameter based on the first information.

The following describes parameters that may be included in the information about the first blockchain by using an example.

The information about the first blockchain may include a wireless communication performance constraint parameter. Different blockchains produce different performance when being applied to a wireless communication network. The first network element may determine a used first blockchain based on a player in a group, an executed communication service, a communication scenario, a networking form, or the like. The first information may include wireless communication performance that can be generated by using the first blockchain.

The wireless communication performance constraint parameter may be one or a combination of the following: a resource type, a packet delay budget, a packet error rate, energy consumption, or a calculation amount. The resource type may include a time domain resource, a frequency domain resource, bandwidth, a time domain length, or a resource location. The energy consumption may be power consumption of a device, and power of the device is limited. The calculation amount may be calculation overheads of a device, and a calculation resource of the device is limited.

The information about the first blockchain may further include a group identifier. For example, the group identifier identifies a first group, and the first group includes the first network element and the one or more second network elements. The first network element and the one or more second network elements join the first group to execute a communication service related to the first group. After accessing the first group, the first network element or the second network element may store the group identifier of the first group. The first network element and the second network element may alternatively join another group. Each group has its own group identifier.

The information about the first blockchain may further include a blockchain type (chain type). The blockchain type may include a public chain, a consortium chain, or a private chain, and the blockchain type in the information about the first blockchain is a type of the first blockchain.

The information about the first blockchain may further include a blockchain structure. A structure of a blockchain may include a main chain, a main chain and a side chain, or a plurality of parallel chains. The blockchain structure in the information about the first blockchain is a structure of the first blockchain.

Blockchains of different types and structures may correspond to different consensus algorithms, incentive mechanisms, or contracts. The incentive mechanism may also be referred to as an incentive mechanism.

The information about the first blockchain may further include a consensus algorithm. The consensus algorithm in the information about the first blockchain is a consensus algorithm used by the first blockchain.

The information about the first blockchain may further include a contract. The contract in the information about the first blockchain is a contract used by the first blockchain.

The information about the first blockchain may further include a reward mechanism. The reward mechanism in the information about the first blockchain is a reward mechanism used by the first blockchain.

A parameter of the first blockchain may be content included in the information about the first blockchain. For example, the parameter of the first blockchain includes one or more of the group identifier, the blockchain type, the blockchain structure, the consensus algorithm, the contract, or the reward mechanism. Performance that can be achieved by blockchains with different parameter combinations is different. When a parameter combination is determined, wireless communication performance that can be achieved by the first blockchain is determined when the first blockchain is applied to the first network element and the second network element in the first group.

In an embodiment, S404 may be further included after S402. An execution sequence of S404 and S403 is not limited in this application.

S404: The second network element sends second information to the first network element. Correspondingly, the first network element receives the second information from the second network element.

The second information is used to respond to the first information, and may be referred to as response information of the first information. For example, the first information is a configuration request (configuration request), and the second information may be a configuration response (configuration response). For another example, the first information is a set chain parameter request (set chain parameter request), and the second information is a set chain parameter response (set chain parameter response).

The second information may indicate, to the first network element, that the second network element updates the local blockchain parameter based on the first information. The second information may indicate that the second network element is to update the local blockchain parameter, may indicate that the second network element has updated the local blockchain parameter, or may indicate that the second network element is updating the local blockchain parameter.

The first network element may determine, based on the second information, that configuration or updating of the blockchain parameter is completed.

It may be understood that the first network element may initially configure the information about the first blockchain for the second network element, or may update the information about the first blockchain after the initial configuration.

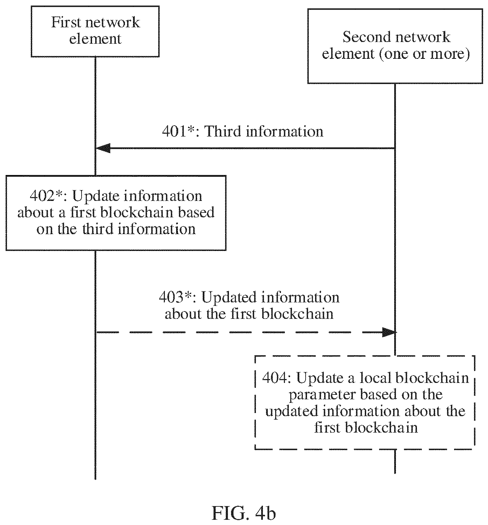

Based on a same technical concept in the embodiment of FIG. 4a, an embodiment of this application further provides a blockchain information transmission method. A procedure is described in FIG. 4b.

S401*: A second network element sends third information to a first network element. Correspondingly, the first network element receives the third information from the second network element.

For an explanation of a first blockchain, refer to the embodiment of FIG. 4a. It may be understood that the second network element may be any one of the foregoing one or more second network elements.

After the first network element configures information about the first blockchain for the second network element, the first network element and the second network element execute a communication service by using the first blockchain. Both the first network element and the second network element may update a parameter of the first blockchain.

The third information may include a group identifier. For the group identifier, refer to the explanation in the embodiment of FIG. 4a. Details are not described herein again.

The third information may further include an identifier of the second network element. The identifier of the second network element may be a globally unique identifier of the second network element, or may be a local identifier of the second network element in a first group. A player in the first group may identify the second network element based on the local identifier.

The third information may further include a wireless communication performance requirement parameter, indicating a wireless communication performance requirement of the second network element, for example, a requirement on a delay, a requirement on energy consumption, or a requirement on a throughput.

The third information may be update chain parameter request (update chain parameter request) information.

S402*: The first network element updates the information about the first blockchain based on the third information.

The first network element may update the information about the first blockchain based on the wireless communication performance requirement parameter in the third information. Specifically, the first network element may update any parameter of the first blockchain, for example, any one of a wireless communication performance constraint parameter, a blockchain type, a blockchain structure, a consensus algorithm, a contract, or a reward mechanism. Optionally, an updated first blockchain should meet a performance requirement of the second network element.

Optionally, after S402*, S403* may be further included.

S403*: The first network element sends updated information about the first blockchain to the second network element. Correspondingly, the second network element receives the updated information about the first blockchain from the first network element.

Optionally, after S403*, S404* may be further included.

S404*: The second network element updates a local blockchain parameter based on the updated information about the first blockchain.

The embodiment of FIG. 4b may be combined with the embodiment of FIG. 4a. For example, the embodiment of FIG. 4a is initial configuration performed by the first network element on the information about the first blockchain of the second network element. After S404, steps such as S401* are further included.

Similar to a case that the first network element sends the first information to the second network element, based on the architecture in FIG. 2 or FIG. 3, there are different implementations in which the second network element sends the third information to the first network element.

With reference to the system architecture in FIG. 2 or FIG. 3, a manner in which the second network element sends the third information when being different network elements is described below by using an example.

When the second network element is an SMF network element, based on the architecture in FIG. 2 or FIG. 3, the SMF may send the third information to the first network element through a service-oriented interface: an M1 interface.

When the second network element is an AMF network element, based on the architecture in FIG. 2 or FIG. 3, the AMF may send the third information to the first network element through a service-oriented interface: an M1 interface.

When the second network element is a UPF network element, based on the architecture in FIG. 2, the UPF may send the third information to the SMF through an N4 interface, and the SMF forwards the third information to the first network element through a service-oriented interface: an M1 interface.

When the second network element is a UPF network element, based on the architecture in FIG. 3, the UPF may send the third information to the first network element through a service-oriented interface: an M2 interface.

When the second network element is an access network device, based on the architecture in FIG. 2, the access network device may send the third information to the AMF through an N2 interface, and the AMF may forward the third information to the first network element through a service-oriented interface: an M1 interface.

When the second network element is an access network device network element, based on the architecture in FIG. 3, the access network device may send the third information to the first network element through a service-oriented interface: an M3 interface.

When the second network element is a terminal device, based on the architecture in FIG. 2, the terminal device may send the third information to the access network device, the access network device forwards the third information to the AMF through an N2 interface, and the AMF forwards the third information to the first network element through a service-oriented interface: an M1 interface.

When the second network element is a terminal device, based on the architecture in FIG. 3, the terminal device may send the third information to the access network device, and the access network device forwards the third information to the first network element through an M3 interface.

With reference to specific application scenarios, the following further describes in detail the method provided in embodiments of this application.

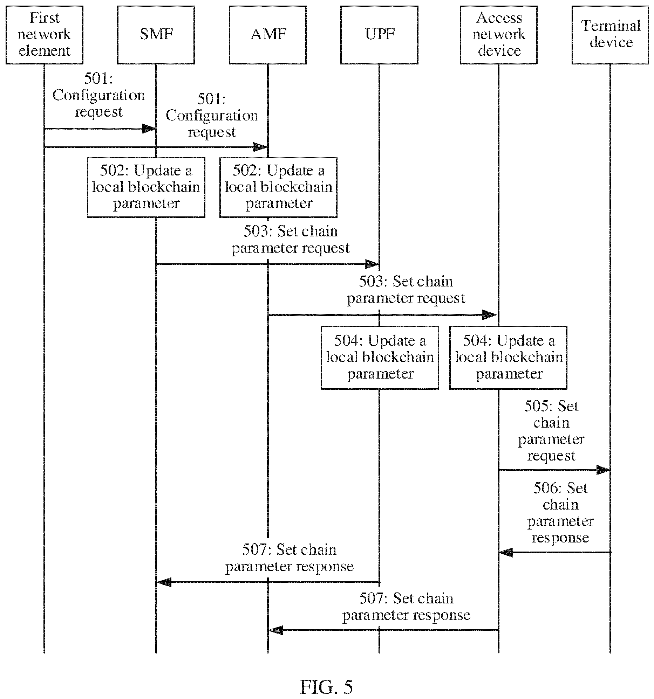

As shown in FIG. 5, in a scenario 1, a procedure of a blockchain information transmission method is described as follows. The embodiment of FIG. 5 may be implemented based on the system architecture shown in FIG. 2. A first group may include five players: the terminal device, the access network device, the UPF, the AMF, and the SMF.

S501: The first network element sends configuration requests respectively to the SMF and the AMF, and the SMF and the AMF respectively receive the configuration requests from the first network element.

The configuration request may include any one or more of a group identifier, a blockchain type, a blockchain structure, a consensus algorithm, a contract, or a reward mechanism. The configuration request may further include a wireless communication performance constraint parameter, for example, a key performance indicator (key performance indicator, KPI) parameter.

The configuration request may further carry an identifier of each player in the first group. Alternatively, the configuration request sent by the first network element to the SMF carries identifiers of the SMF and the UPF, and the configuration request sent by the first network element to the AMF carries an identifier of the AMF, an identifier of the access network device, and an identifier of the terminal device.

S502: The SMF and the AMF respectively update local blockchain parameters based on the configuration requests.

The SMF and the AMF may first verify ID information, and may compare a locally stored group identifier with the group identifier in the configuration request. If the locally stored group identifier is consistent with the group identifier in the first group, the verification succeeds; otherwise, the verification fails. When the verification succeeds, the local blockchain parameters are updated.

S503: The SMF and the AMF respectively send set chain parameter requests to the UPF and the access network device, and the UPF and the access network device respectively receive the set chain parameter requests from the SMF and the AMF.

The set chain parameter request may include information included in the configuration request.

S504: The UPF and the access network device respectively update local blockchain parameters based on the set chain parameter requests.

Alternatively, the UPF and the access network device may first verify ID information, and update the local blockchain parameters when the verification succeeds.

S505: The access network device sends a set chain parameter request to the terminal device within a communication range. Correspondingly, the terminal device receives the set chain parameter request from the access network device.

A parameter included in the set chain parameter request is the same as a parameter included in the set chain parameter request in S503.

The terminal device may update a local blockchain parameter based on the set chain parameter request. Alternatively, the terminal device may first verify ID information, and update the local blockchain parameter when the verification succeeds.

S506: The terminal device returns a set chain parameter response to the access network device. Correspondingly, the access network device receives the set chain parameter response from the terminal device.

S507: The UPF and the access network device respectively return set chain parameter responses to the SMF and the AMF. Correspondingly, the SMF and the AMF respectively receive the set chain parameter responses from the UPF and the access network device.

A set chain parameter response returned by the SMF to the first network element may indicate that the SMF configures a chain parameter, may indicate that the UPF configures a chain parameter, or may indicate that the UPF and the SMF configure chain parameters. After receiving the set chain parameter response from the UPF, the SMF may return the set chain parameter response to the first network element together with the set chain parameter response from the UPF. Alternatively, the SMF may separately return the set chain parameter response of the SMF to the first network element, and separately return the set chain parameter response of the UPF to the first network element.

A set chain parameter response returned by the AMF to the first network element may indicate that the AMF configures a chain parameter, may indicate that the access network device configures a chain parameter, may indicate that the terminal device configures a chain parameter, or may indicate that the AMF, the access network device, and the terminal device configure a plurality of chain parameters. After receiving the set chain parameter response from the access network device, the AMF may return the set chain parameter response to the first network element together with the set chain parameter response from the access network device. Alternatively, the AMF may separately return the set chain parameter response of the AMF to the first network element, and separately return the set chain parameter response of the access network device and/or the set chain parameter response of the terminal device to the first network element.

In the embodiment of FIG. 5, two transmission paths are included. One of the paths is: the first network element-the AMF→the access network device-the terminal device, and the other path is: the first network element-the SMF→the UPF. A sequence of message transmission on the two paths may not be limited, and the message transmission may be concurrently performed.

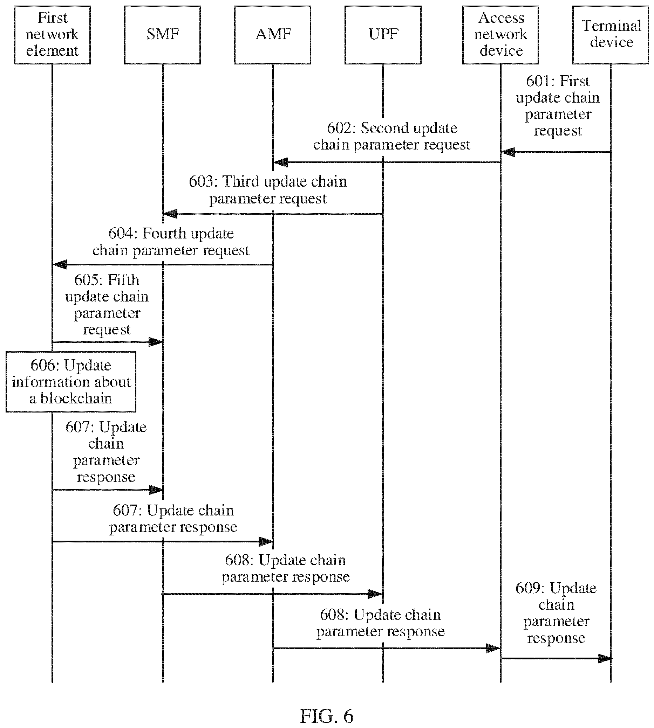

As shown in FIG. 6, in a scenario 2, a procedure of a blockchain information transmission method is described as follows. The embodiment of FIG. 6 may be implemented based on the system architecture shown in FIG. 2. A first group may include five players: the terminal device, the access network device, the UPF, the AMF, and the SMF.

S601: The terminal device sends a first update chain parameter request (update chain parameter Request) to the access network device. Correspondingly, the access network device receives the first update chain parameter request from the terminal device.

The first update chain parameter request may correspond to the third information in the embodiment of FIG. 4a.

The first update chain parameter request may carry any one or more of a group identifier, an identifier of the terminal device, or a wireless communication performance requirement parameter.

S602: The access network device sends a second update chain parameter request to the AMF. Correspondingly, the AMF receives the second update chain parameter request from the access network device.

Optionally, the access network device may need to update a blockchain parameter, or may not need to update the blockchain parameter. The access network device may separately send its own update chain parameter request to the AMF, and separately forward the first update chain parameter request of the terminal device to the AMF. Alternatively, the access network device may combine and send the update chain parameter requests of the terminal device and the access network device to the AMF. If the update chain parameter requests are sent separately, the second update chain parameter request may carry the update chain parameter request of the access network device, including any one or more of the group identifier, an identifier of the access network device, or a wireless communication performance requirement parameter. The second update chain parameter request may be the forwarded first update chain parameter request. If the update chain parameter requests are combined and sent, the second update chain parameter request may carry the group identifier, the identifier of the terminal device, the identifier of the access network device, the wireless communication performance requirement parameter in the first update chain parameter request, and a wireless communication performance requirement parameter of the access network device.

S603: The UPF sends a third update chain parameter request to the SMF. Correspondingly, the SMF receives the third update chain parameter request from the UPF.

S604: The AMF sends a fourth update chain parameter request to the first network element. Correspondingly, the first network element receives the fourth update chain parameter request from the AMF.

It may be understood that the fourth update chain parameter request may include an update chain parameter request of the AMF, may further include the forwarded update chain parameter request of the access network device, and may further include the forwarded update chain parameter request of the terminal device.

S605: The SMF sends a fifth update chain parameter request to the first network element. Correspondingly, the first network element receives the fifth update chain parameter request from the SMF.

It may be understood that the fifth update chain parameter request may include an update chain parameter request of the SMF, and may further include the forwarded update chain parameter request of the UPF.

S606: The first network element updates information about a blockchain based on the received update chain parameter requests.

S607: The first network element sends update chain parameter responses respectively to the SMF and the AMF. Correspondingly, the SMF and the AMF respectively receive the update chain parameter responses from the first network element.

The update chain parameter response includes updated information about the blockchain.

S608: The SMF and the AMF respectively forward the update chain parameter responses to the UPF and the access network device.

S609: The access network device forwards the update chain parameter response to the terminal device.

In the embodiment of FIG. 6, two transmission paths are included. One of the paths is: the terminal device→the access network device-the AMF→the first network element, and the other path is: the UPF→the SMF→the first network element. A sequence of message transmission on the two paths may not be limited, and the message transmission may be concurrently performed.

The embodiment of FIG. 6 may be combined with the embodiment of FIG. 5 to form a solution that needs to be protected in this application. For example, the embodiment of FIG. 6 is implemented based on the embodiment of FIG. 5.

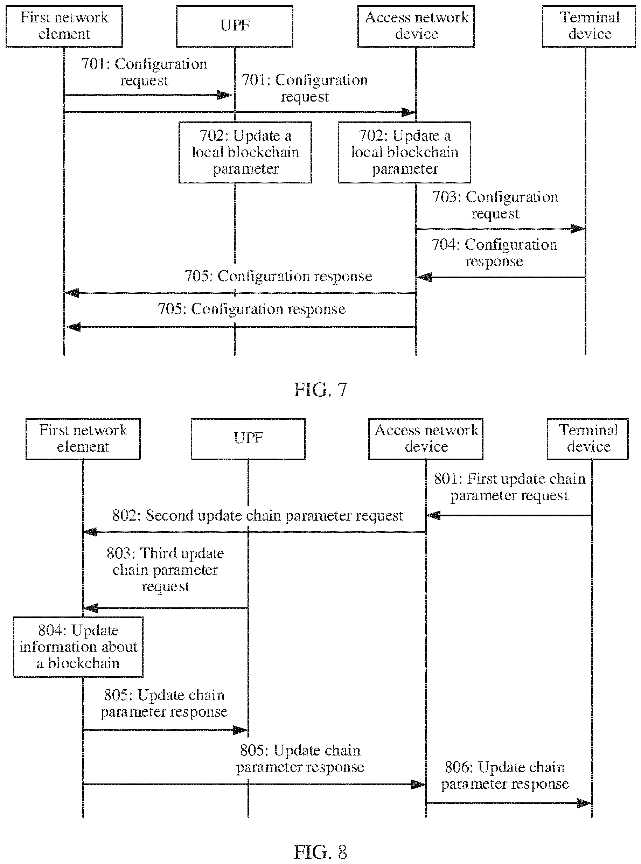

As shown in FIG. 7, in a scenario 3, a procedure of a blockchain information transmission method is described as follows. The embodiment of FIG. 7 may be implemented based on the system architecture shown in FIG. 3. A first group may include three players: the terminal device, the access network device, and the UPF.

S701: The first network element sends configuration requests respectively to the UPF and the access network device, and the UPF and the access network device respectively receive the configuration requests from the first network element.

The configuration request may include any one or more of a group identifier, a blockchain type, a blockchain structure, a consensus algorithm, a contract, or a reward mechanism. The configuration request may further include a wireless communication performance constraint parameter, for example, a key performance indicator (key performance indicator, KPI) parameter.

The configuration request may further carry an identifier of each player in the first group. The configuration request sent by the first network element to the UPF carries an identifier of the UPF. The configuration request sent by the first network element to the access network device carries an identifier of the access network device and an identifier of the terminal device.

S702: The UPF and the access network device respectively update local blockchain parameters based on the configuration requests.

Alternatively, the UPF and the access network device may first verify ID information, and update the local blockchain parameters when the verification succeeds.

S703: The access network device sends a configuration request to the terminal device within a communication range. Correspondingly, the terminal device receives the configuration request from the access network device.

A parameter included in the configuration request is the same as a parameter included in the configuration request in S701.

The terminal device may update a local blockchain parameter based on the configuration request. Alternatively, the terminal device may first verify ID information, and update the local blockchain parameter when the verification succeeds.

S704: The terminal device returns a configuration response to the access network device. Correspondingly, the access network device receives the configuration response from the terminal device.

S705: The UPF and the access network device respectively return configuration responses to the first network element. Correspondingly, the first network element respectively receives the configuration responses from the UPF and the access network device.

In the embodiment of FIG. 7, two transmission paths are included. One of the paths is: the first network element→the access network device→the terminal device, and the other path is: the first network element-the UPF. A sequence of message transmission on the two paths may not be limited, and the message transmission may be concurrently performed.

As shown in FIG. 8, in a scenario 4, a procedure of a blockchain information transmission method is described as follows. The embodiment of FIG. 8 may be implemented based on the system architecture shown in FIG. 3. A first group may include three players: the terminal device, the access network device, and the UPF.

S801: The terminal device sends a first update chain parameter request (update chain parameter Request) to the access network device. Correspondingly, the access network device receives the first update chain parameter request from the terminal device.

The first update chain parameter request may correspond to the third information in the embodiment of FIG. 4a.

The first update chain parameter request may carry any one or more of a group identifier, an identifier of the terminal device, or a wireless communication performance requirement parameter.

S802: The access network device sends a second update chain parameter request to the first network element. Correspondingly, the first network element receives the second update chain parameter request from the access network device.

Optionally, the access network device may need to update a blockchain parameter, or may not need to update the blockchain parameter. The access network device may separately send its own update chain parameter request to the first network element, and separately forward the first update chain parameter request of the terminal device to the first network element. Alternatively, the access network device may combine and send the update chain parameter requests of the terminal device and the access network device to the first network element. If the update chain parameter requests are sent separately, the second update chain parameter request may carry the update chain parameter request of the access network device, including any one or more of the group identifier, an identifier of the access network device, or a wireless communication performance requirement parameter. The second update chain parameter request may be the forwarded first update chain parameter request. If the update chain parameter requests are combined and sent, the second update chain parameter request may carry the group identifier, the identifier of the terminal device, an identifier of the access network device, the wireless communication performance requirement parameter in the first update chain parameter request, and a wireless communication performance requirement parameter of the access network device.

S803: The UPF sends a third update chain parameter request to the first network element. Correspondingly, the first network element receives the third update chain parameter request from the UPF.

S804: The first network element updates information about a blockchain based on the received update chain parameter requests.

S805: The first network element sends update chain parameter responses respectively to the UPF and the access network device.

S806: The access network device forwards the update chain parameter response to the terminal device.

In the embodiment of FIG. 8, two transmission paths are included. One of the paths is: the terminal device-the access network device-the first network element, and the other path is: the UPF→the first network element. A sequence of message transmission on the two paths may not be limited, and the message transmission may be concurrently performed.

The embodiment of FIG. 8 may be combined with the embodiment of FIG. 7 to form a solution that needs to be protected in this application. For example, the embodiment of FIG. 8 is implemented based on the embodiment of FIG. 7.

It may be understood that to implement functions in the foregoing embodiments, the first network element and the second network element include corresponding hardware structures and/or software modules for performing the functions. Persons skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on a particular application scenario and design constraint of the technical solutions.

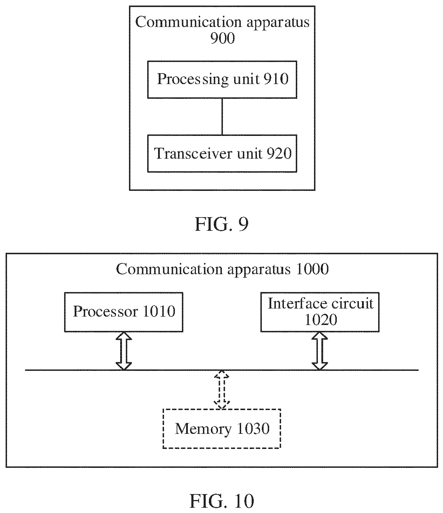

FIG. 9 and FIG. 10 are schematic diagrams of structures of possible communication apparatuses according to an embodiment of this application. These communication apparatuses may be configured to implement the functions of the first network element or the second network element in the foregoing method embodiments, and therefore may also implement beneficial effects of the foregoing method embodiments. In this embodiment of this application, the communication apparatus may be the first network element 101 shown in FIG. 1, or may be the second network element 102 shown in FIG. 1. The communication apparatus may be the first network element shown in FIG. 2 or FIG. 3, or may be any network element other than the first network element shown in FIG. 2 or FIG. 3. The communication apparatus may be a module (for example, a chip) used in a first network element or a second community grid member.

As shown in FIG. 9, a communication apparatus 900 includes a processing unit 910 and a transceiver unit 920. The communication apparatus 900 is configured to implement the functions of the first network element or the second network element in the method embodiments shown in FIG. 4a, FIG. 4b, and FIG. 5 to FIG. 8.

When the communication apparatus 900 is configured to implement the functions of the first network element in the method embodiment shown in FIG. 4a, the processing unit 910 is configured to obtain first information, where the first information includes information about a first blockchain, and the first blockchain is used to carry data of the first network element and data of one or more second network elements. The transceiver unit 920 is configured to send the first information to the one or more second network elements.

Optionally, the information about the first blockchain includes a wireless communication performance constraint parameter.

Optionally, the wireless communication performance constraint parameter includes one or a combination of the following: a resource type, a packet delay budget, a packet error rate, energy consumption, or a calculation amount.

Optionally, the information about the first blockchain further includes one or a combination of the following:
an identifier of a first group, a blockchain type, a blockchain structure, a consensus algorithm, a contract, or a reward mechanism, where the first group includes the first network element and the one or more second network elements.

Optionally, the transceiver unit 920 is further configured to receive second information from the second network element, where the second information indicates, to the first network element, that the second network element updates a local blockchain parameter based on the first information.

The transceiver unit 920 is further configured to receive third information from the second network element; and the processing unit 910 is further configured to update the information about the first blockchain based on the third information.

Optionally, the third information includes one or a combination of the following: the identifier of the first group, an identifier of the second network element, and a wireless communication performance requirement parameter, where the first group includes the first network element and the one or more second network elements.

Optionally, the second network element is a UPF, and when sending the first information to the one or more second network elements, the transceiver unit 920 is configured to: send the first information to an SMF through a first interface, where the SMF forwards the first information to the UPF; or send the first information to the UPF through a second interface.

Optionally, the second network element is an access network device, and when sending the first information to the one or more second network elements, the transceiver unit 920 is configured to: send the first information to an AMF through a first interface, where the AMF forwards the first information to the access network device; or send the first information to the access network device through a third interface.

Optionally, the second network element is a terminal device, and when sending the first information to the one or more second network elements, the transceiver unit 920 is configured to: send the first information to an AMF through a first interface, where the AMF forwards the first information to an access network device, and the access network device forwards the first information to the terminal device; or the transceiver unit 920 is configured to send the first information to an access network device through a third interface, where the access network device forwards the first information to the terminal device.

When the communication apparatus 900 is configured to implement the functions of the second network element in the method embodiment shown in FIG. 4a, the transceiver unit 920 is configured to receive first information from a first network element, where the first information includes information about a first blockchain, and the first blockchain is used to carry data of the first network element and data of one or more second network elements. The processing unit 910 is configured to update a local blockchain parameter based on the first information.

Optionally, the information about the first blockchain includes a wireless communication performance constraint parameter.

Optionally, the wireless communication performance constraint parameter includes one or a combination of the following: a resource type, a packet delay budget, a packet error rate, energy consumption, or a calculation amount.

Optionally, the information about the first blockchain further includes one or a combination of the following:
an identifier of a first group, a blockchain type, a blockchain structure, a consensus algorithm, a contract, or a reward mechanism, where the first group includes the first network element and the one or more second network elements.

Optionally, the transceiver unit 920 is further configured to send second information to the first network element, where the second information indicates, to the first network element, that the second network element updates the local blockchain parameter based on the first information.

Optionally, the transceiver unit 920 is further configured to send third information to the first network element, where the third information is used by the first network element to update the information about the first blockchain.

Optionally, the third information includes one or a combination of the following: the identifier of the first group, an identifier of the second network element, and a wireless communication performance requirement parameter, where the first group includes the first network element and the one or more second network elements.

For more detailed descriptions of the processing unit 910 and the transceiver unit 920, directly refer to the related descriptions in the method embodiment shown in FIG. 4a. Details are not described herein. The processing unit 910 and the transceiver unit 920 may further perform steps in other method embodiments.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to store instructions executed by the processor 1010, store input data required by the processor 1010 to run the instructions, or store data generated after the processor 1010 runs the instructions.

When the communication apparatus 1000 is configured to implement the method shown in FIG. 4a, the processor 1010 is configured to implement a function of the processing unit 910, and the interface circuit 1020 is configured to implement a function of the transceiver unit 920.

When the communication apparatus is a chip used in a first network element, the chip of the first network element implements the functions of the first network element in the foregoing method embodiments. The chip of the first network element receives information from another module (for example, a radio frequency module or an antenna) in the first network element, where the information is sent by a second network element to the first network element. Alternatively, the chip of the first network element sends information to another module (for example, a radio frequency module or an antenna) in the first network element, where the information is sent by the first network element to a second network element.

When the communication apparatus is a chip used in a second network element, the chip of the second network element implements the functions of the second network element in the foregoing method embodiments. The chip of the second network element receives information from another module (for example, a radio frequency module or an antenna) in the second network element, where the information is sent by a first network element to the second network element. Alternatively, the chip of the second network element sends information to another module (for example, a radio frequency module or an antenna) in the second network element, where the information is sent by the second network element to a first network element.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

Some or all of the operations and functions performed by the first network element or the second network element described in the foregoing method embodiments of this application may be implemented by using a chip or an integrated circuit.

An embodiment of this application further provides a chip, including a processor, configured to support a communication apparatus in implementing the functions of the first network element or the second network element in the foregoing method embodiments. In a possible design, the chip is connected to a memory or the chip includes the memory, and the memory is configured to store program instructions and data that are necessary for the communication apparatus.

An embodiment of this application provides a computer-readable storage medium storing a computer program. The computer program includes instructions for performing the foregoing method embodiments.

An embodiment of this application provides a computer program product including instructions. When the computer program product runs on a computer, the foregoing method embodiments are implemented.

Persons skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may alternatively be stored in a computer-readable memory that can guide a computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

Although preferred embodiments of this application have been described, persons skilled in the art can make changes and modifications to these embodiments once they learn the basic inventive concept. Therefore, the following claims are intended to be construed as to cover the preferred embodiments and all changes and modifications falling within the scope of this application.

Clearly, persons skilled in the art can make various modifications and variations to embodiments of this application without departing from the spirit and scope of embodiments of this application. In this way, this application is intended to cover these modifications and variations provided that the modifications and variations of embodiments of this application fall within the scope of the claims of this application and equivalent technologies thereof.

## Claims

1. A blockchain information transmission method, applied to a communication network, wherein the communication network comprises a first network element and one or more second network elements, and the method comprises:
obtaining, by the first network element, first information, wherein the first information comprises information about a first blockchain, and the first blockchain is used to carry data of the first network element and data of the one or more second network elements; and
sending, by the first network element, the first information to the one or more second network elements.

2. The method according to claim 1, wherein the information about the first blockchain comprises a wireless communication performance constraint parameter.

3. The method according to claim 2, wherein the wireless communication performance constraint parameter comprises one or a combination of the following: a resource type, a packet delay budget, a packet error rate, energy consumption, or a calculation amount.

4. The method according to any one of claims 1 to 3, wherein the information about the first blockchain further comprises one or a combination of the following:
an identifier of a first group, a blockchain type, a blockchain structure, a consensus algorithm, a contract, or a reward mechanism, wherein the first group comprises the first network element and the one or more second network elements.

5. The method according to any one of claims 1 to 4, wherein the method further comprises:
receiving, by the first network element, second information from the second network element, wherein the second information indicates, to the first network element, that the second network element updates a local blockchain parameter based on the first information.

6. The method according to any one of claims 1 to 5, wherein the method further comprises:
receiving, by the first network element, third information from the second network element, wherein the third information comprises one or a combination of the following: the identifier of the first group, an identifier of the second network element, and a wireless communication performance requirement parameter, wherein the first group comprises the first network element and the one or more second network elements; and
updating, by the first network element, the information about the first blockchain based on the third information.

7. The method according to any one of claims 1 to 6, wherein the second network element is a UPF, and the sending, by the first network element, the first information to the one or more second network elements comprises:
sending, by the first network element, the first information to an SMF through a first interface, and forwarding, by the SMF, the first information to the UPF; or
sending, by the first network element, the first information to the UPF through a second interface.

8. The method according to any one of claims 1 to 6, wherein the second network element is an access network device, and the sending, by the first network element, the first information to the one or more second network elements comprises:
sending, by the first network element, the first information to an AMF through a first interface, and forwarding, by the AMF, the first information to the access network device; or
sending, by the first network element, the first information to the access network device through a third interface.

9. The method according to any one of claims 1 to 6, wherein the second network element is a terminal device, and the sending, by the first network element, the first information to the one or more second network elements comprises:
sending, by the first network element, the first information to an AMF through a first interface, forwarding, by the AMF, the first information to an access network device, and forwarding, by the access network device, the first information to the terminal device; or
sending, by the first network element, the first information to an access network device through a third interface, and forwarding, by the access network device, the first information to the terminal device.

10. A blockchain information transmission method, applied to a communication network, wherein the communication network comprises a first network element and one or more second network elements, the first network element and the one or more second network elements are carried in a first blockchain, and the method comprises:
receiving, by the second network element, first information from the first network element, wherein the first information comprises information about the first blockchain, and the first blockchain is used to carry data of the first network element and data of the one or more second network elements; and
updating, by the second network element, a local blockchain parameter based on the first information.

11. The method according to claim 10, wherein the information about the first blockchain comprises a wireless communication performance constraint parameter.

12. The method according to claim 11, wherein the wireless communication performance constraint parameter comprises one or a combination of the following: a resource type, a packet delay budget, a packet error rate, energy consumption, or a calculation amount.

13. The method according to any one of claims 10 to 12, wherein the information about the first blockchain further comprises one or a combination of the following:
an identifier of a first group, a blockchain type, a blockchain structure, a consensus algorithm, a contract, or a reward mechanism, wherein the first group comprises the first network element and the one or more second network elements.

14. The method according to any one of claims 10 to 13, wherein the method further comprises:
sending, by the second network element, second information to the first network element, wherein the second information indicates, to the first network element, that the second network element updates the local blockchain parameter based on the first information.

15. The method according to any one of claims 10 to 14, wherein the method further comprises:
sending, by the second network element, third information to the first network element, wherein the third information comprises one or a combination of the following: the identifier of the first group, an identifier of the second network element, and a wireless communication performance requirement parameter, wherein the first group comprises the first network element and the one or more second network elements; and the third information is used by the first network element to update the information about the first blockchain.

16. A communication apparatus, comprising:
a processing unit, configured to obtain first information, wherein the first information comprises information about a first blockchain, and the first blockchain is used to carry data of a first network element and data of one or more second network elements; and
a transceiver unit, configured to send the first information to the one or more second network elements.

17. The apparatus according to claim 16, wherein the information about the first blockchain comprises a wireless communication performance constraint parameter.

18. The apparatus according to claim 17, wherein the wireless communication performance constraint parameter comprises one or a combination of the following: a resource type, a packet delay budget, a packet error rate, energy consumption, or a calculation amount.

19. The apparatus according to any one of claims 16 to 18, wherein the information about the first blockchain further comprises one or a combination of the following:
an identifier of a first group, a blockchain type, a blockchain structure, a consensus algorithm, a contract, or a reward mechanism, wherein the first group comprises the first network element and the one or more second network elements.

20. The apparatus according to any one of claims 16 to 19, wherein the transceiver unit is further configured to:
receive second information from the second network element, wherein the second information indicates, to the first network element, that the second network element updates a local blockchain parameter based on the first information.

21. The apparatus according to any one of claims 16 to 20, wherein the transceiver unit is further configured to:
receive third information from the second network element, wherein the third information comprises one or a combination of the following: the identifier of the first group, an identifier of the second network element, and a wireless communication performance requirement parameter, wherein the first group comprises the first network element and the one or more second network elements; and
the processing unit is further configured to: update the information about the first blockchain based on the third information.

22. The apparatus according to any one of claims 16 to 21, wherein the second network element is a UPF, and when sending the first information to the one or more second network elements, the transceiver unit is configured to:
send the first information to an SMF through a first interface, wherein the SMF forwards the first information to the UPF; or
send the first information to the UPF through a second interface.

23. The apparatus according to any one of claims 16 to 21, wherein the second network element is an access network device, and when sending the first information to the one or more second network elements, the transceiver unit is configured to:
send the first information to an AMF through a first interface, wherein the AMF forwards the first information to the access network device; or
send the first information to the access network device through a third interface.

24. The apparatus according to any one of claims 16 to 21, wherein the second network element is a terminal device, and when sending the first information to the one or more second network elements, the transceiver unit is configured to:
send the first information to an AMF through a first interface, wherein the AMF forwards the first information to an access network device, and the access network device forwards the first information to the terminal device; or
send the first information to an access network device through a third interface, wherein the access network device forwards the first information to the terminal device.

25. A communication apparatus, comprising:
a transceiver unit, configured to receive first information from a first network element, wherein the first information comprises information about a first blockchain, and the first blockchain is used to carry data of the first network element and data of one or more second network elements; and
a processing unit, configured to update a local blockchain parameter based on the first information.

26. The apparatus according to claim 25, wherein the information about the first blockchain comprises a wireless communication performance constraint parameter.

27. The apparatus according to claim 26, wherein the wireless communication performance constraint parameter comprises one or a combination of the following: a resource type, a packet delay budget, a packet error rate, energy consumption, or a calculation amount.

28. The apparatus according to any one of claims 25 to 27, wherein the information about the first blockchain further comprises one or a combination of the following:
an identifier of a first group, a blockchain type, a blockchain structure, a consensus algorithm, a contract, or a reward mechanism, wherein the first group comprises the first network element and the one or more second network elements.

29. The apparatus according to any one of claims 25 to 28, wherein the transceiver unit is further configured to:
send second information to the first network element, wherein the second information indicates, to the first network element, that the second network element updates the local blockchain parameter based on the first information.

30. The apparatus according to any one of claims 25 to 29, wherein the transceiver unit is further configured to:
send third information to the first network element, wherein the third information comprises one or a combination of the following: the identifier of the first group, an identifier of the second network element, and a wireless communication performance requirement parameter, wherein the first group comprises the first network element and the one or more second network elements; and the third information is used by the first network element to update the information about the first blockchain.

31. A communication apparatus, comprising a processor and an interface circuit, wherein the interface circuit is configured to: receive a signal from a communication apparatus other than the communication apparatus and transmit the signal to the processor, or send a signal from the processor to the communication apparatus other than the communication apparatus, and the processor is configured to implement the method according to any one of claims 1 to 9 or the method according to any one of claims 10 to 15 by using a logic circuit or by executing code instructions.

32. The apparatus according to claim 31, further comprising a memory, wherein the memory is configured to store instructions executed by the processor, store input data required by the processor to run the instructions, or store data generated after the processor runs the instructions.

33. A computer-readable storage medium, wherein the readable storage medium stores a computer program or instructions, and when the computer program or the instructions are executed by a communication apparatus, the method according to any one of claims 1 to 9 or the method according to any one of claims 10 to 15 is implemented.

34. A computer program product, wherein the program product stores a computer program or instructions, and when the computer program or the instructions are executed by a communication apparatus, the method according to any one of claims 1 to 9 or the method according to any one of claims 10 to 15 is implemented.

35. A chip, wherein the chip comprises a processor, and the processor is configured to execute a program, instructions, or code stored in a memory, to implement the method according to any one of claims 1 to 9 or the method according to any one of claims 10 to 15.

36. The chip according to claim 35, wherein the chip is connected to the memory, or the chip comprises the memory.

37. A communication system, comprising a first network element and one or more second network elements, wherein the second network element comprises any one of the following: a terminal device, an access network device, a user plane function UPF network element, a session management function SMF network element, or an access and mobility management function AMF network element, wherein
an interface connection relationship between the first network element and the second network element meets one or more of the following: the first network element is connected to the AMF and the SMF through a first interface; the first network element is connected to the UPF through a second interface; and the first network element is connected to the access network device through a third interface.

38. The system according to claim 37, wherein the first network element is configured to perform the method according to any one of claims 1 to 9, and the second network element is configured to perform the method according to any one of claims 10 to 15.
